# EUROPEAN PATENT APPLICATION

(11) **EP 3 591 514 A1**
(43) Date of publication of application: **08.01.2020**
(21) Application number: 18781128.6
(22) Date of filing: 02.04.2018
(51) Int. Cl.: G06F 3/14, H04L 29/08, H04N 21/43, H04N 21/81

(54) **ELECTRONIC DEVICE AND SCREEN IMAGE DISPLAY METHOD FOR ELECTRONIC DEVICE**

(30) Priority: 05.04.2017 KR 20170044378
(71) Applicant: Samsung Electronics Co., Ltd., Suwon-si, Gyeonggi-do 16677 (KR)
(72) Inventor: LIM, Nae-Hyun, Gyeonggi-do 16677 (KR); KIM, Jin-Hyoung, Gyeonggi-do 16677 (KR); XU, Jiangwei, Gyeonggi-do 16677 (KR); LEE, Hyun-Joo, Gyeonggi-do 16677 (KR)
(74) Representative: Nederlandsch Octrooibureau
(86) International application number: PCT/KR2018/003865
(87) International publication number: WO 2018/186642

(57) **Abstract**

According to various embodiments of the present invention, an electronic device can comprise: a display for displaying at least a part of an image corresponding to a designated direction in image data on a screen as a partial image; a communication circuit for receiving information related to an external electronic device; and a processor for performing a control so as to display a first partial image of the image data through the display, to check information on a second partial image, being displayed on the external electronic device, of the image data from the information received through the communication circuit, and to allow the information on the second partial image the information on the second partial image to be displayed through the display while the first partial image is being displayed on the screen through the display. The various embodiments of the present invention can allow other embodiments to be possible.

## Description

### [Technical Field]

Various embodiments of the disclosure relate to an electronic device and a screen display method wherein the electronic device displays information related to an external electronic device.

### [Background Art]

In general, virtual reality (VR) refers to an environment or a situation generated by computer graphics so as to have an environment similar to reality and denotes an interface that enables people to have perceptions through sensory organs to feel as if they are making actual interactions. Users can interact with the VR in real time by manipulating devices and can have sensory experiences similar to real ones.

In addition, VR technology has become accessible easily and frequently in various services such as education, gaming, navigation, advertising, or blogging through electronic devices that support VR services. For example, an electronic device may divide a screen into left and right sides and display images corresponding to the left and right eyes through the divided screens, respectively. For example, head-mounted devices that can be coupled to display devices or head-mounted display (HMD) devices are being developed such that images displayed through respective divided screens can be provided throughout the entire field of view. Users are provided with images corresponding to both eyes throughout the entire field of view and thus are provided with VR services.

When the HMD device is worn on a part of the user's body (for example, on the user's head), the HMD device or the electronic device mounted on the HMD device may output a received omnidirectional image. The omnidirectional image may be output by sensing the acceleration, angular velocity, or sloping direction of the HMD device and displaying image data in a view direction corresponding to the sensed information among the omnidirectional image. Accordingly, the HMD device may change and display the screen in response to the user's movement, and the user may watch the changing screen and thus receive a reality-emulating service.

### [Detailed Description of the Invention]

### [Technical Problem]

Electronic devices that provide VR are personal electronic devices providing images corresponding to both eyes. Such personal electronic devices have a limitation in that multiple people cannot simultaneously watch the same image with a single device.

Even if multiple users wear respective electronic devices and are provided with the same image, the point of time of playback of images played by the electronic devices worn by respective users may differ from each other. In addition, even if the points of time of playback of images in respective electronic devices are identical, different images may be displayed on screens, depending on the orientation of view of respective users in the images.

In the case of a 360° image, for example, users watch only images corresponding to partial fields of view (FOV) among the entire 360° image, respectively. Accordingly, even users watching the same image may be viewing different screens. This makes it impossible to confirm whether or not users are watching the same screen, and thus makes efficient conversation therebetween difficult.

Various embodiments of the disclosure may provide an electronic device and a screen display method by an electronic device, wherein, when the same image data is played by multiple electronic devices, the playback timepoint of image data played by each electronic device is synchronized, and one of the electronic devices provides information regarding the orientation of an image displayed by another electronic device, or information regarding a partial image.

### [Technical Solution]

In accordance with an aspect of the disclosure, an electronic device according to an embodiment may include: a display configured to display, on a screen, at least a part of an image corresponding to a designated orientation among image data, as a partial image; a communication circuit configured to receive information related to an external electronic device; and a processor configured to control to display a first partial image among the image data through the display, identify information related to a second partial image being displayed in the external electronic device among the image data from information received through the communication circuit, and while the first partial image is displayed on the screen through the display, contol to display the information related to the second partial image through the display.

A method for displaying a screen in an electronic device according to one of various embodiments may include: displaying, on a screen of the electronic device, at least a part of an image corresponding to a designated orientation among image data, as a first partial image; receiving information related to an external electronic device through a communication circuit; identifying information related to a second partial image of the image data being displayed by the external electronic device among the image data, from information received through the communication circuit; and while the first partial image is displayed on the screen, displaying the information related to the second partial image on the screen.

### [Advantageous Effects]

An electronic device and a screen display method by an electronic device according to various embodiments provide a user of the electronic device with not only an image visible to the user, but also information regarding the orientation of an image of another user who watches the same image.

In addition, various embodiments provide an electronic device and a screen display method by an electronic device wherein, when the same image data is played by multiple electronic devices, the playback timepoint of image data played by each electronic device is synchronized, and information regarding the orientation of an image or information regarding a partial image is provided such that multiple users can watch the same image by using their own electronic devices thereof, respectively. Accordingly, multiple users can converse efficiently while watching the same screen through respective electronic devices.

### [Brief Description of Drawings]

FIG. 1 is a diagram illustrating a network environment according to various embodiments of the disclosure.
FIG. 2 is a diagram illustrating an example of the configuration of an electronic device according to various embodiments of the disclosure.
FIG. 3 is a block diagram of a program module according to various embodiments of the disclosure.
FIG. 4 is a diagram illustrating an example of mounting an electronic device on a wearable device according to various embodiments of the disclosure.
FIG. 5 is a diagram illustrating an example of mounting an electronic device on a wearable device according to various embodiments of the disclosure.
FIG. 6 is a diagram illustrating an example of a user wearing a wearable device having an electronic device mounted thereon according to various embodiments of the disclosure.
FIG. 7 is a diagram illustrating a screen mode of an electronic device according to various embodiments of the disclosure.
FIG. 8 is a diagram illustrating a 3D space according to various embodiments of the disclosure.
FIG. 9 is a diagram illustrating an example of a screen displayed on a wearable device according to various embodiments of the disclosure.
FIG. 10 is a diagram illustrating the concept of a screen display method according to various embodiments of the disclosure.
FIG. 11 is a diagram illustrating the concept of time synchronization according to various embodiments of the disclosure.
FIG. 12 is a diagram illustrating the concept of a screen display method according to various embodiments of the disclosure.
FIG. 13 is a diagram illustrating a change in a partial image displayed on a screen, among the entire image, according to various embodiments of the disclosure.
FIG. 14 is a diagram illustrating a change in a partial image displayed on a screen, among the entire image, according to various embodiments of the disclosure.
FIG. 15 is a diagram illustrating a change in a partial image displayed on a screen, among the entire image, according to various embodiments of the disclosure.
FIG. 16 is a diagram illustrating a change in a partial image displayed on a screen, among the entire image, according to various embodiments of the disclosure.
FIG. 17 is a diagram illustrating an example of displaying information related to an external electronic device according to various embodiments of the disclosure.
FIG. 18 is a diagram illustrating an example of displaying information related to an external electronic device according to various embodiments of the disclosure.
FIG. 19 is a diagram illustrating an example of displaying information related to an external electronic device according to various embodiments of the disclosure.
FIG. 20 is a diagram illustrating the concept of a relative distance between partial images according to various embodiments of the disclosure.
FIG. 21 is a flowchart illustrating a screen display procedure of an electronic device according to various embodiments of the disclosure.
FIG. 22 is a signal flowchart illustrating information transmitted/received between devices according to various embodiments of the disclosure.
FIG. 23 is a signal flowchart illustrating information transmitted/received between devices according to various embodiments of the disclosure.
FIG. 24 is a block diagram illustrating an example of the configuration of a wearable device according to various embodiments of the disclosure.

### [Mode for Carrying out the Invention]

Hereinafter, various embodiments will be described with reference to the accompanying drawings. The embodiments and the terms used therein are not intended to limit the technology disclosed herein to specific forms, and should be understood to include various modifications, equivalents, and/or alternatives to the corresponding embodiments. In describing the drawings, similar reference numerals may be used to designate similar constituent elements. A singular expression may include a plural expression unless they are definitely different in a context. As used herein, singular forms may include plural forms as well unless the context clearly indicates otherwise. The expression "a first", "a second", "the first", or "the second" may modify various elements regardless of the order and/or the importance, and is used merely to distinguish one element from another element without limiting the corresponding elements. When an element (e.g., first element) is referred to as being "(functionally or communicatively) connected," or "directly coupled" to another element (second element), the element may be connected directly to the another element or connected to the another element through yet another element (e.g., third element). The expression "plural" may mean at least two

The expression "configured to" as used in various embodiments may be interchangeably used with, for example, "suitable for", "having the capacity to", "adapted to", "made to", "capable of', or "designed to" in terms of hardware or software, according to circumstances. Alternatively, in some situations, the expression "device configured to" may mean that the device, together with other devices or components, "is able to". For example, the phrase "processor adapted (or configured) to perform A, B, and C" may mean a dedicated processor (e.g., embedded processor) only for performing the corresponding operations or a generic-purpose processor (e.g., Central Processing Unit (CPU) or Application Processor (AP)) that can perform the corresponding operations by executing one or more software programs stored in a memory device.

An electronic device according to various embodiments may include at least one of, for example, a smartphone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), an MPEG-1 audio layer-3 (MP3) player, a mobile medical device, a camera, or a wearable device. According to various embodiments, the wearable device may include at least one of an accessory type (e.g., a watch, a ring, a bracelet, an anklet, a necklace, a pair of glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit). In some embodiments, the electronic device may include at least one of, for example, a television, a Digital Video Disk (DVD) player, an audio player, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

In other embodiments, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Device, an electronic device for a ship (e.g., a navigation device for a ship and a gyro-compass), avionics, security devices, an automotive head unit, a robot for home or industry, an Automatic Teller Machine (ATM) in banks, Point Of Sales (POS) in a shop, or an internet device of things (e.g., a light bulb, various sensors, electric or gas meter, a sprinkler device, a fire alarm, a thermostat, a streetlamp, a toaster, a sporting goods, a hot water tank, a heater, a boiler, etc.). According to some embodiments, an electronic device may include at least one of a part of furniture or a building/structure, an electronic board, an electronic signature receiving device, a projector, and various types of measuring instruments (e.g., a water meter, an electric meter, a gas meter, a radio wave meter, and the like). In various embodiments, the electronic device may be flexible, or may be a combination of one or more of the aforementioned various devices. According to an embodiment, the electronic devices are not limited to those described above. In the disclosure, the term "user" may indicate a person using an electronic device or a device (e.g., an artificial intelligence electronic device) using an electronic device.

An omnidirectional or multidirectional image camera system refers to a camera system capable of taking images in the entire direction of 360° or in a part of the direction with reference to a fixed point of view. An omnidirectional image may include both a view seen when an observer makes a full turn at a fixed location, and a view seen when moving his/her head downward and upward. The omnidirectional image camera system can take images in the entire direction by using multiple cameras or by mounting a special type of mirror (such as a hyperbolic mirror) or a special lens (such as a fisheye lens) on the camera. The camera may provide a server or an electronic device with image data obtained by taking images in the entire direction.

The image data may be played or displayed by a head-mounted electronic device (such as an HMD device) that can be worn on a human body. When the HMD device is worn on a part of the user's body (for example, on the user's head), the image data may be played and displayed on the screen. The HMD device may sense acceleration, angular velocity, or sloping direction, and may display, on the screen, image data (for example, a partial image) in a view direction corresponding to the sensed information among the image data. Accordingly, the HMD device can change and display the screen in response to the user's movement, and the user can watch the changing screen and thus receive a reality-emulating service.

According to various embodiments, when the same image data (for example, 360° image data) is to be played by multiple electronic devices, the playback timepoint of image data played by each electronic device may be synchronized, and one of the electronic devices may provide information regarding an image displayed by another electronic device (for example, information regarding the orientation of the image displayed on the screen among the entire image data or information regarding a partial image).

In various embodiments of the disclosure described later, "image data" played by an electronic device and displayed on a screen may include data configured such that, according to the orientation of the user or the electronic device inside an image, at least a part of the image corresponding to the orientation may be displayed on the screen as a partial image. For example, the image data may include a VR image, a 360° image, a panorama image, an animation, a manga, a still image, and a panorama photograph.

In addition, in various embodiments of the disclosure described later, a "partial image" may refer to at least a part of an image displayed on the screen in response to a designated orientation among the entire image data that can be displayed at each point of time of the image data. The "partial image" may also be referred to as a "display image" or "display data" because the same may refer to at least a part of an image displayed on the screen of the electronic device among the entire image data.

Although following descriptions will be made for convenience of description with regard to a case in which a partial image among a 360° image is displayed (or played), but embodiments of the disclosure are applicable to any type of image data configured such that at least a part of the entire image is displayed through the display of the electronic device.

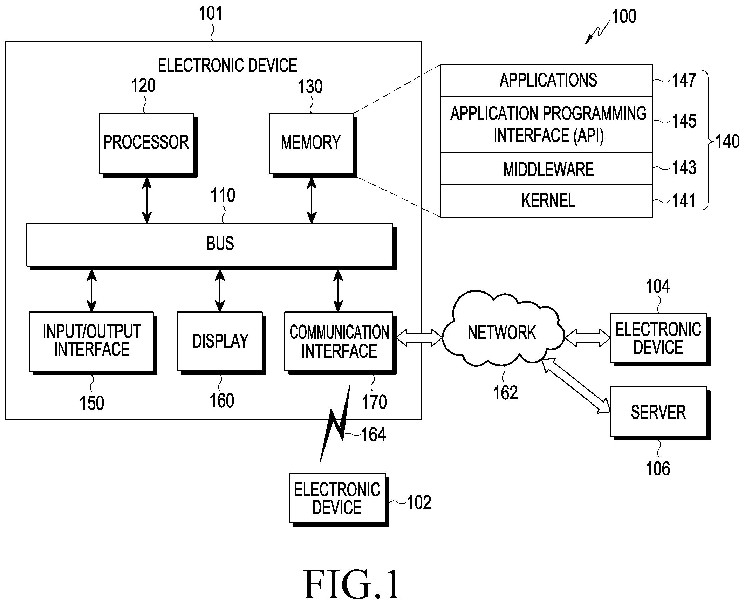

FIG. 1 is a block diagram of an electronic device 101 within a network environment 100 according to various embodiments of the disclosure. Referring to FIG. 1, the electronic device 101 may include a bus 110, a processor 120, a memory 130, an input/output interface 150, a display 160, and a communication interface 170. In some embodiments, the electronic device 101 may omit at least one of the elements, or may further include another element. The bus 110 may include, for example, a circuit that interconnects the elements 110 to 170 and transmits communication (for example, control messages or data) between the elements. The processor 120 may include one or more of a central processing unit, an application processor, or a communication processor (CP). The processor 120, for example, may carry out operations or data processing relating to the control and/or communication of at least one other element of the electronic device 101. According to various embodiments, the electronic device 101 may include an HMD device configured to display image data, and the electronic device 101 may be mounted and used on a separate HMD device.

The memory 130 may include volatile and/or non-volatile memory. The memory 130 may store, for example, instructions or data relating to at least one other element of the electronic device 101. According to various embodiments, the memory 130 may store image data to be displayed through the display 160.

According to an embodiment, the memory 130 may store software and/or a program 140. The program 140 may include a kernel 141, middleware 143, an application programming interface (API) 145, and/or application programs (or "applications") 147. At least some of the kernel 141, the middleware 143, or the API 145 may be referred to as an operating system. The kernel 141 may control or manage system resources (for example, the bus 110, the processor 120, or the memory 130) used for executing an operation or function implemented by other programs (for example, the middleware 143, the API 145, or the application program 147). Furthermore, the kernel 141 may provide an interface through which the middleware 143, the API 145, or the application programs 147 can access the individual elements of the electronic device 101 to control or manage the system resources.

The middleware 143 may function as, for example, an intermediary for allowing the API 145 or the application programs 147 to communicate with the kernel 141 to exchange data. Furthermore, the middleware 143 may process one or more task requests, which are received from the application programs 147, according to priorities thereof. For example, the middleware 143 may assign priorities for using the system resources (for example, the bus 110, the processor 120, the memory 130, or the like) of the electronic device 101 to one or more of the application programs 147, and may process the one or more task requests. The API 145 is an interface through which the applications 147 control functions provided from the kernel 141 or the middleware 143, and may include, for example, at least one interface or function (for example, instruction) for file control, window control, image processing, or text control. For example, the input/output interface 150 may forward instructions or data, input from a user or an external device, to the other element(s) of the electronic device 101, or may output instructions or data, received from the other element(s) of the electronic device 101, to the user or an external device.

The display 160 may include, for example, a liquid crystal display (LCD), a light emitting diode (LED) display, an organic light emitting diode (OLED) display, a micro electro mechanical system (MEMS) display, or an electronic paper display. The display 160 may display, for example, various types of content (for example, text, images, videos, icons, and/or symbols) for a user. The display 160 may include a touch screen and may receive, for example, a touch, gesture, proximity, or hovering input using an electronic pen or the user's body part, for example.

The communication interface 170 may establish, for example, communication between the electronic device 101 and an external device (for example, a first external electronic device 102, a second external electronic device 104, or a server 106). For example, the communication interface 170 may be connected to a network 162 through wireless or wired communication to communicate with the external device (for example, the second external electronic device 104 or the server 106). According to various embodiments, the electronic device 101 may receive image data from the server 106 through the communication interface 170 and may store the same in the memory 130. The electronic device 101 may receive information regarding the first external electronic device 102 or the second external electronic device 104 through the communication interface 170. The information regarding the first external electronic device 102 or the second external electronic device 104 may be transmitted to the electronic device 101 through the server 106, and may be directly transmitted from the first external electronic device 102 or the second external electronic device 104 to the electronic device 101 without going through the server 106.

The wireless communication may include, for example, a cellular communication that uses at least one of LTE, LTE-Advance (LTE-A), code division multiple access (CDMA), wideband CDMA (WCDMA), universal mobile telecommunications system (UMTS), wireless broadband (WiBro), global system for mobile communications (GSM), or the like. According to an embodiment, the wireless communication may include, as exemplified by the element 164 in FIG. 1, at least one of wireless fidelity (WiFi), light fidelity (LiFi), Bluetooth, Bluetooth low energy (BLE), ZigBee, near field communication (NFC), magnetic secure transmission), radio frequency (RF), or body area network (BAN), for example. According to an embodiment, the wireless communication may include GNSS. The GNSS may be, for example, global positioning system (GPS), global navigation satellite system (Glonass), Beidou navigation satellite system (hereinafter, referred to as "Beidou"), or Galileo, the European global satellite-based navigation system. Hereinafter, in this document, the term "GPS" may be interchangeable with the term "GNSS". The wired communication may include, for example, at least one of a universal serial bus (USB), a high definition multimedia interface (HDMI), recommended standard 232 (RS-232), power line communication, a plain old telephone service (POTS), and the like. The network 162 may include a telecommunications network, for example, at least one of a computer network (for example, a LAN or a WAN), the Internet, or a telephone network.

Each of the first and second external electronic devices 102 and 104 may be of the same or a different type from the electronic device 101. According to various embodiments, all or some of the operations executed in the electronic device 101 may be executed in another electronic device or a plurality of electronic devices (for example, the electronic devices 102 and 104 or the server 106). According to an embodiment, when the electronic device 101 has to perform some functions or services automatically or in response to a request, the electronic device 101 may make a request for performing at least some functions relating thereto to another device (for example, the electronic device 102 or 104 or the server 106) instead of performing the functions or services by itself or in addition. Another electronic device (for example, the electronic device 102 or 104, or the server 106) may execute the requested functions or the additional functions and may deliver a result thereof to the electronic device 101. The electronic device 101 may provide the received result as it is or may additionally process the received result to provide the requested functions or services. To this end, for example, cloud computing, distributed computing, or client-server computing technology may be used.

According to various embodiments, when a first partial image of image data is displayed on the screen through the display 160 of the electronic device 101, and when a second partial image of the image data is displayed on the screen of the first external electronic device 102 or the second external electronic device 104, the electronic device 101 may receive information related to the second partial image through the communication interface 170. According to various embodiments, the electronic device 101 may generate at least one piece of information from the received information related to the second partial image, and may display the same on the screen through the display 160.

An electronic device according to one of various embodiments of the disclosure may include: a display configured to display, on a s creen, at least a part of an image corresponding to a designated orientation among image data, as a partial image; a communication circuit configured to receive information related to an external electronic device; and a processor configured to control to display a first partial image among the image data through the display, identify information related to a second partial image being displayed in the external electronic device among the image data from information received through the communication circuit, and while the first partial image is displayed on the screen through the display, control to display the information related to the second partial image through the display.

According to various embodiments, the information related to the second partial image being displayed through the display may include information regarding a relative positional relation with the first partial image.

According to various embodiments, the processor may be configured to control to output a preconfigured notification when the distance between the first partial image and the second partial image is within a designated distance.

According to various embodiments, the preconfigured notification may include at least one of a sound, an image, a symbol, and an animation.

According to various embodiments, the electronic device may be configured to receive the image data from a server.

According to various embodiments, the processor may be configured to control to transmit information regarding a playback timepoint of the image data being played by the electronic device through the communication circuit in response to a playback timepoint synchronization request of the external electronic device.

According to various embodiments, the communication circuit may be configured to receive information regarding a playback timepoint of the image data being played by the external electronic device.

According to various embodiments, the processor may be configured to control to transmit information regarding the first partial image being displayed through the display to the external electronic device through the communication circuit.

According to various embodiments, the image data may include at least one of a VR image, a 360° image, a panorama image, an animation image, a manga, a still image, and a panorama photograph.

According to various embodiments, the processor may be configured to control to display information related to the second partial image through the display when a playback timepoint of the image data played by the external electronic device and a playback timepoint of the image data played by the electronic device are synchronized.

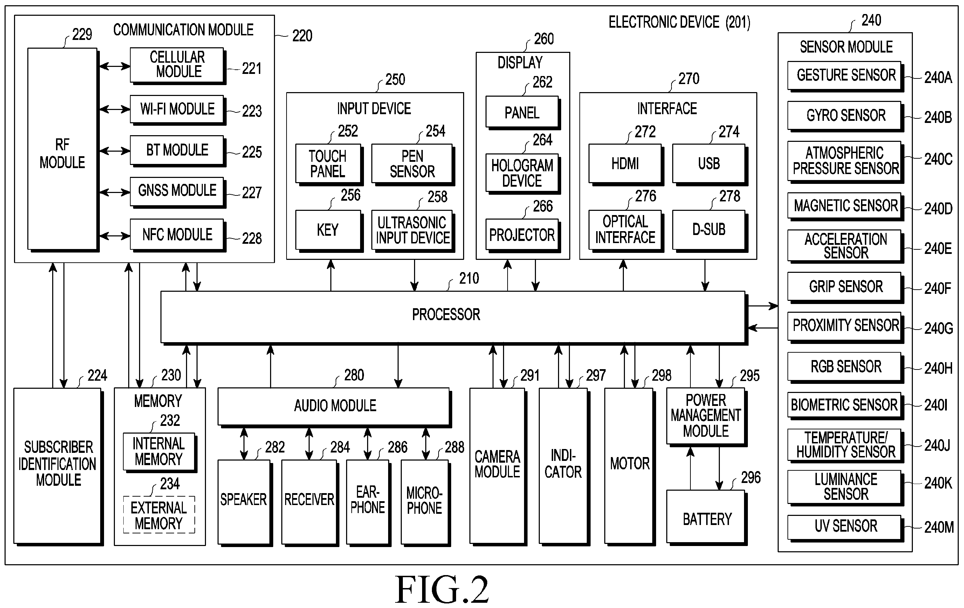

FIG. 2 is a block diagram of an electronic device 201 according to various embodiments of the disclosure.

Referring to FIG. 2, an electronic device 201 may include, for example, the entirety or a part of the electronic device 101 illustrated in FIG. 1. The electronic device 201 may include at least one processor 210 (for example, an AP), a communication module 220, a subscriber identification module 224, a memory 230, a sensor module 240, an input device 250, a display 260, an interface 270, an audio module 280, a camera module 291, a power management module 295, a battery 296, an indicator 297, and a motor 298. The processor 210 may control a plurality of hardware or software elements connected thereto and may perform various data processing and operations by driving an operating system or an application program. The processor 210 may be implemented by, for example, a system on chip (SoC). According to an embodiment, the processor 210 may further include a graphic processing unit (GPU) and/or an image signal processor. The processor 210 may also include at least some of the elements illustrated in FIG. 2 (for example, a cellular module 221). The processor 210 may load, in a volatile memory, instructions or data received from at least one of the other elements (for example, a non-volatile memory), process the loaded instructions or data, and store the result data in the non-volatile memory.

The communication module 220 (for example, the communication interface 170) may include, for example, a cellular module 221, a Wi-Fi module 223, a Bluetooth module 225, a GNSS module 227, an NFC module 228, and an RF module 229. The cellular module 221 may provide, for example, a voice communication service, a video communication service, a text message service, an Internet service, or the like through a communication network. According to an embodiment, the cellular module 221 may identify and authenticate the electronic device 201 within a communication network using the subscriber identification module 224 (for example, a SIM card). According to an embodiment, the cellular module 221 may perform at least some of the functions that the processor 210 can provide. According to an embodiment, the cellular module 221 may include a communication processor (CP). In some embodiments, at least some (two or more) of the cellular module 221, the Wi-Fi module 223, the Bluetooth module 225, the GNSS module 227, or the NFC module 228 may be included in a single integrated chip (IC) or IC package. The RF module 229 may transmit/receive, for example, a communication signal (for example, an RF signal). The RF module 229 may include, for example, a transceiver, a power amplifier module (PAM), a frequency filter, a low noise amplifier (LNA), an antenna, or the like. According to another embodiment, at least one of the cellular module 221, the Wi-Fi module 223, the Bluetooth module 225, the GNSS module 227, or the NFC module 228 may transmit/receive an RF signal through a separate RF module. The subscriber identification module 224 may include, for example, a card that includes a subscriber identity module or an embedded SIM, and may contain unique identification information (for example, an integrated circuit card identifier (ICCID)) or subscriber information (for example, an international mobile subscriber identity (IMSI)).

The memory 230 (for example, the memory 130) may include, for example, an internal memory 232 or an external memory 234. The internal memory 232 may include, for example, at least one of a volatile memory (for example, a DRAM, an SRAM, an SDRAM, or the like) and a non-volatile memory (for example, a one time programmable ROM (OTPROM), a PROM, an EPROM, an EEPROM, a mask ROM, a flash ROM, a flash memory, a hard disc drive, or a Solid State Drive (SSD)). The external memory 234 may include a flash drive, for example, a compact flash (CF), a secure digital (SD), a micro-SD, a mini-SD, an extreme digital (xD), a multi-media card (MMC), or a memory stick. The external memory 234 may be functionally or physically connected to the electronic device 201 through various interfaces.

The sensor module 240 may, for example, measure a physical quantity or detect the operating state of the electronic device 201 and convert the measured or detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (for example, a red, green, blue (RGB) sensor), a biometric sensor 240I, a temperature/humidity sensor 240J, an illumination sensor 240K, and an ultraviolet (UV) sensor 240M. Additionally or alternatively, the sensor module 240 may include, for example, an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling one or more sensors included therein. In some embodiments, the electronic device 201 may further include a processor configured to control the sensor module 240 as a part of or separately from the processor 210, and may control the sensor module 240 while the processor 210 is in a sleep state.

The input device 250 may include, for example, a touch panel 252, a (digital) pen sensor 254, a key 256, or an ultrasonic input device 258. The touch panel 252 may employ, for example, at least one of a capacitive scheme, a resistive scheme, an infrared scheme, or an ultrasonic scheme. Furthermore, the touch panel 252 may further include a control circuit. The touch panel 252 may further include a tactile layer to provide a tactile reaction to a user. The (digital) pen sensor 254 may include, for example, a recognition sheet that is a part of, or separate from, the touch panel. The key 256 may include, for example, a physical button, an optical key, or a keypad. The ultrasonic input device 258 may detect ultrasonic waves, which are generated by an input tool, through a microphone (for example, a microphone 288) to identify data corresponding to the detected ultrasonic waves.

The display 260 (for example, the display 160) may include a panel 262, a hologram device 264, a projector 266, and/or a control circuit for controlling them. The panel 262 may be implemented to be, for example, flexible, transparent, or wearable. The panel 262, together with the touch panel 252, may be configured as one or more modules. According to an embodiment, the panel 262 may include a pressure sensor (or a force sensor) which may measure the strength of pressure of a user's touch. The pressure sensor may be implemented so as to be integrated with the touch panel 252 or may be implemented as one or more sensors separate from the touch panel 252. The hologram device 264 may show a three-dimensional image in the air by using an interference of light. The projector 266 may display an image by projecting light onto a screen. The screen may be located, for example, inside or outside the electronic device 201. The interface 270 may include, for example, an HDMI 272, a USB 274, an optical interface 276, or a D-subminiature (D-sub) 278. The interface 270 may be included in, for example, the communication interface 170 illustrated in FIG. 1. Additionally or alternatively, the interface 270 may, for example, include a mobile high-definition link (MHL) interface, a SD card/multi-media card (MMC) interface, or an infrared data association (IrDA) standard interface.

The audio module 280 may convert, for example, sound into an electrical signal, and vice versa. At least some elements of the audio module 280 may be included, for example, in the input/output interface 150 illustrated in FIG. 1. The audio module 280 may process sound information that is input or output through, for example, a speaker 282, a receiver 284, an earphone 286, a microphone 288, and the like. The camera module 291 is a device that can photograph a still image and a moving image. According to an embodiment, the camera module 291 may include one or more image sensors (for example, a front sensor or a rear sensor), a lens, an image signal processor (ISP), or a flash (for example, an LED or xenon lamp). The power management module 295 may manage, for example, the power of the electronic device 201. According to an embodiment, the power management module 295 may include a power management integrated circuit (PMIC), a charger IC, or a battery or fuel gauge. The PMIC may use a wired and/or wireless charging method. Examples of the wireless charging method may include a magnetic resonance method, a magnetic induction method, an electromagnetic wave method, or the like. Additional circuits (for example, a coil loop, a resonance circuit, a rectifier, and the like) for wireless charging may be further included. The battery gauge may measure, for example, the residual amount of the battery 296 and a voltage, current, or temperature while charging. The battery 296 may include, for example, a rechargeable battery and/or a solar battery.

The indicator 297 may display a particular state, for example, a booting state, a message state, a charging state, or the like of the electronic device 201 or a part (for example, the processor 210) of the electronic device 201. The motor 298 may convert an electrical signal into a mechanical vibration and may generate a vibration, a haptic effect, or the like. The electronic device 201 may include a mobile TV support device (for example, a GPU) that can process media data according to a standard, such as digital multimedia broadcasting (DMB), digital video broadcasting (DVB), mediaFlo™, or the like. Each of the constituent elements described in this document may be configured as one or more components, and the names of the corresponding elements may change based on the type of electronic device. In various embodiments, the electronic device (for example, the electronic device 201) may omit some elements or may further include additional elements, or some of the elements of the electronic device may be combined with each other to configure one entity, in which case the electronic device may identically perform the functions of the corresponding elements prior to the combination.

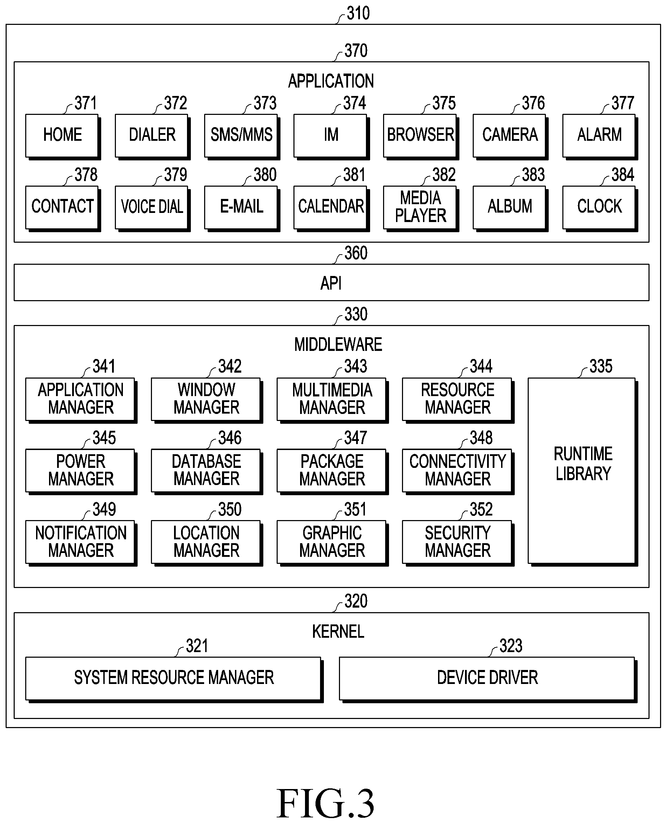

FIG. 3 is a block diagram of a program module according to various embodiments of the disclosure.

According to an embodiment, the program module 310 (for example, the program 140) may include an operating system that controls resources relating to an electronic device (for example, the electronic device 101) and/or various applications (for example, the application programs 147) that are driven on the operating system. The operating system may include, for example, Android™, iOS™, Windows™, Symbian™, Tizen™, or Bada™. Referring to FIG. 3, the program module 310 may include a kernel 320 (for example, the kernel 141), middleware 330 (for example, the middleware 143), an API 360 (for example, the API 145), and/or applications 370 (for example, the application programs 147). At least a part of the program module 310 may be preloaded on the electronic device, or may be downloaded from an external electronic device (for example, the electronic device 102 or 104 or the server 106).

The kernel 320 may include, for example, a system resource manager 321 and/or a device driver 323. The system resource manager 321 may control, allocate, or retrieve system resources. According to an embodiment, the system resource manager 321 may include a process manager, a memory manager, or a file system manager. The device driver 323 may include, for example, a display driver, a camera driver, a Bluetooth driver, a shared memory driver, a USB driver, a keypad driver, a Wi-Fi driver, an audio driver, or an inter-process communication (IPC) driver. The middleware 330 may provide, for example, a function required by the applications 370 in common, or may provide various functions to the applications 370 through the API 360 such that the applications 370 can efficiently use limited system resources within the electronic device. According to an embodiment, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include, for example, a library module that a compiler uses in order to add a new function through a programming language while the application 370 is being executed. The runtime library 335 may manage an input/output, manage a memory, or process an arithmetic function. The application manager 341 may manage, for example, the life cycle of the application 370. The window manager 342 may manage GUI resources used for a screen. The multimedia manager 343 may identify formats required for playing various media files and may encode or decode the media files using a codec suitable for the corresponding format. The resource manager 344 may manage the source code of the application 370 or the space in memory. The power manager 345 may manage, for example, battery capacity, temperature, or power, and may determine or provide power information required for the operation of the electronic device based on corresponding information. According to an embodiment, the power manager 345 may operate in conjunction with a basic input/output system (BIOS). The database manager 346 may, for example, generate, search, or change databases to be used by the application 370. The package manager 347 may manage the installation or update of an application that is distributed in the form of a package file.

The connectivity manager 348 may manage, for example, a wireless connection. The notification manager 349 may inform the user of an event, such as an incoming message, an appointment, or a proximity notification. The location manager 350 may manage, for example, the location information of the electronic device. The graphic manager 351 may manage a graphic effect to be provided to a user or a user interface relating to the graphic effect, for example. The security manager 352 may provide, for example, system security or user authentication. According to an embodiment, the middleware 330 may include a telephony manager for managing a voice or video call function of the electronic device or a middleware module that is capable of forming a combination of the functions of the above-described elements. According to an embodiment, the middleware 330 may provide specialized modules according to the type of operation systems. The middleware 330 may dynamically remove some of the existing elements, or may add new elements. The API 360 is, for example, a set of API programming functions, and may be provided while having different configurations depending on the operating system. For example, in the case of Android or iOS, one API set may be provided for each platform, and in the case of Tizen, two or more API sets may be provided for each platform.

The applications 370 may include, for example, a home application 371, a dialer application 372, an SMS/MMS application 373, an instant messaging (IM) application 374, a browser application 375, a camera application 376, an alarm application 377, a contact application 378, a voice dial application 379, an email application 380, a calendar application 381, a media player application 382, an album application 383, a watch application 384, a health-care application (for example, for measuring exercise quantity or blood glucose), or an application providing environmental information (for example, atmospheric pressure, humidity, or temperature information). According to an embodiment, the applications 370 may include an information exchange application that can support the exchange of information between the electronic device and an external electronic device. The information exchange application may include, for example, a notification relay application for relaying particular information to an external electronic device or a device management application for managing an external electronic device. For example, the notification relay application may relay notification information generated in the other applications of the electronic device to an external electronic device, or may receive notification information from an external electronic device to provide the received notification information to a user. The device management application may perform a function (for example, a function of turning on/off an external electronic device (or some elements thereof) or controlling brightness (or resolution) of the display) of the external electronic device communicating with the electronic device or install, delete, or update an application executed by the external electronic device. According to an embodiment, the applications 370 may include applications (for example, a health care application of a mobile medical appliance) that are designated according to the attributes of an external electronic device. According to an embodiment, the application 370 may include applications received from an external electronic device. At least some of the program module 310 may be implemented (for example, executed) by software, firmware, hardware (for example, the processor 210), or a combination of two or more thereof and may include a module, a program, a routine, an instruction set, or a process for performing one or more functions.

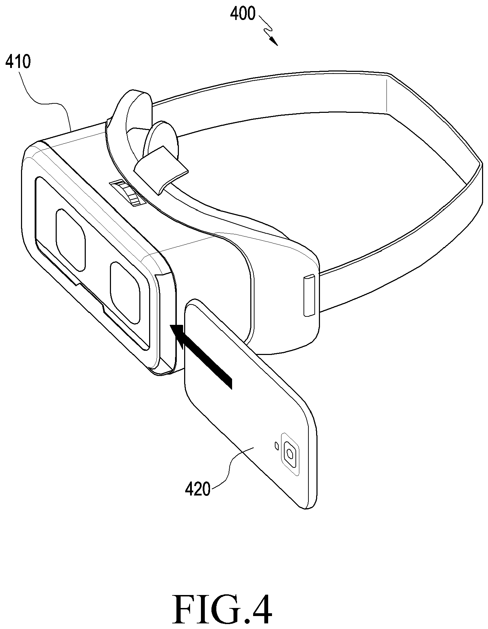

Hereinafter, an example of mounting an electronic device (for example, a smartphone) on a wearable device will be described with reference to FIG. 4, FIG. 5, and FIG. 6.

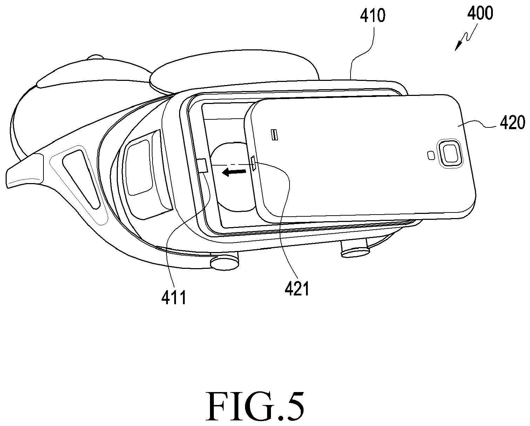

FIG. 4 and FIG. 5 are diagrams illustrating an example of a wearable device 400 according to various embodiments of the disclosure. Referring to FIG. 4 and FIG. 5, the wearable device 400 may be the electronic device 101, 102, or 104 illustrated in FIG. 1. In addition, as described above, the wearable device 400 may provide only the function of a cradle having no function of communication with the electronic device 420. The wearable device 400 may include a body and a cover.

The cover may be fixed to the wearable device 400 so as to cover the periphery of the rear surface of the electronic device 420, when the electronic device 420 is mounted on the body portion 410 of the wearable device 400, such that that the electronic device 420 remains mounted therein. The wearable device 400 may include a support portion which can be used when the user puts the wearable device 400 on his/her head.

In addition, the body portion 410 of the wearable device 400 may have lenses provided in positions corresponding to both eyes of the wearer, respectively. The wearer may watch a display (not shown) of the electronic device 420 through the lenses while the electronic device 420 remains mounted on the body portion 410 of the wearable device 410. The wearable device 400 may be a mechanical structure configured such that the electronic device 420 can be mounted thereon in an attachable/detachable manner as illustrated in FIG. 4.

According to various embodiments, the wearable device 400 may include at least one of the constituent elements of the electronic device 101 of FIG. 1. For example, the wearable device 400 may include at least one of a touch panel, a button, a wheel key, and a touch pad. The touch panel may receive a touch input by the user. The touch input may be a direct touch input by the user on the touch panel or a hovering input approaching the touch panel. When the electronic device 420 is mounted on the wearable device 400, the wearable device 400 may be connected thereto through an interface such as a USB so as to communicate with the electronic device 420.

The electronic device 420 may respond to an input received from the wearable device 400 and control a function corresponding to the input. For example, the electronic device 420 may control the volume or the screen (for example, an image playback screen in a VR mode) in response to the received input. For example, when the electronic device 420 is mounted on the wearable device 400, the external device connector 421 of the electronic device 420 may connect to the connector 411 of the wearable device 400 such that the devices can communicate with each other.

According to various embodiments, the electronic device 420 may display a first partial image of image data (for example, 360° image data), and may display information related to a second partial image of the image data displayed by an external electronic device.

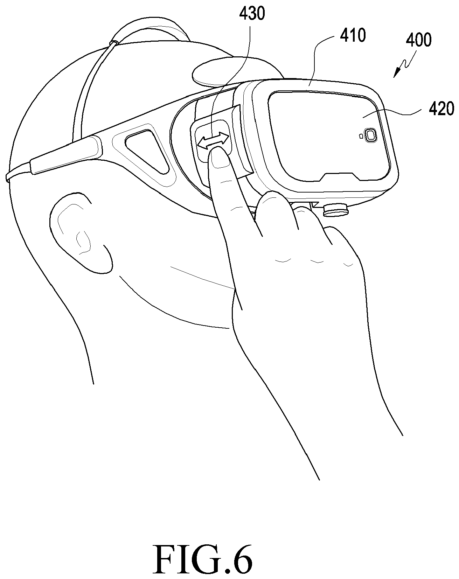

FIG. 6 is a diagram illustrating an example of a user wearing a wearable device 400 having an electronic device 420 mounted thereon according to various embodiments of the disclosure. As illustrated in FIG. 6, the user may wear a wearable device 400 having an electronic device 420 mounted thereon on his/her head as illustrated in FIG. 6. The wearer may watch the screen of the display of the electronic device 420 through lenses provided in the wearable device 400.

In addition, as illustrated in FIG. 6, the wearer may control functions of the wearable device 400 through a touch pad 430 provided on a side surface of the body portion 410 of the wearable device 400, or may control functions of the electronic device 420 therethrough. According to various embodiments, information display in a VR mode may be implemented by a smartphone or a mobile phone, for example, and may also be implemented by a wearable device 400 (for example, an HMD device).

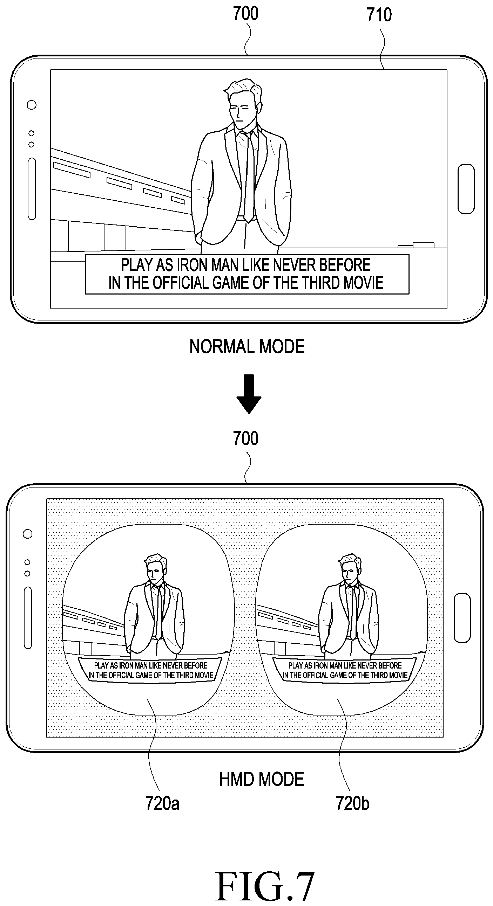

FIG. 7 is a diagram illustrating a screen mode of an electronic device according to various embodiments of the disclosure. Referring to FIG. 7, the electronic device 700 may be the electronic device 420 illustrated in FIG. 4, FIG. 5, and FIG. 6. When the electronic device 700 operates in a normal mode, the same may display a single operating screen 710 as illustrated on the upper part of FIG. 7.

According to various embodiments, when the electronic device 700 is mounted on a wearable device, the same may operate in a VR mode (for example, HMT mode) as illustrated on the lower part of FIG. 7. When the electronic device 700 operates in the VR mode, the same may separately display a screen 720a corresponding to the user's left eye and a screen 720b corresponding to the right eye. On the VR mode screen, a single image may be separately displayed as two images 720a and 720b.

According to various embodiments of the disclosure, when the electronic device 700 is mounted on a wearable device and operates in the VR mode, information related to an occurred event may be processed and displayed on the screen corresponding to the VR mode (the screen 720a corresponding to the left eye and the screen 720b corresponding to the right eye).

The above-mentioned examples of the electronic device or wearable device illustrate devices capable of displaying image data according to embodiments of the disclosure, and various embodiments of the disclosure are not limited to the above-mentioned devices. For example, embodiments of the disclosure are applicable to any type of device capable of displaying image data according to various embodiments.

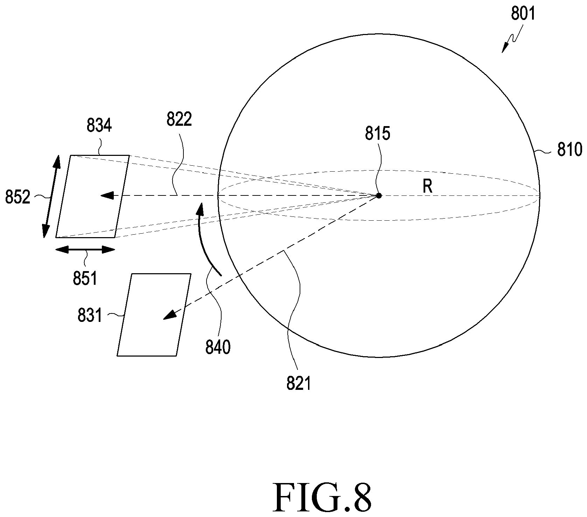

FIG. 8 is a diagram illustrating a 3D space according to various embodiments of the disclosure. Referring to FIG. 8, the 3D space 801 may be implemented by at least one of an electronic device (for example, the electronic device 101, 102, or 104), a processor of the electronic device, or a controller of the electronic device.

The 3D space 801 may be implemented by texture-mapping a wide-angle image/video to a preconfigured 3D model 810 (for example, a sphere having a preconfigured radius R, a cube, or a cylinder) and positioning a user viewpoint (or virtual camera) inside the 3D model (for example, at the origin 815).

The electronic device may render a first partial image 831 (or a first display screen) corresponding to a first area of the 3D space 801 according to a first viewpoint (for example, a main camera viewpoint) 821 and display the same on the screen of the display.

The electronic device may render a second partial image 834 (or a second display screen) corresponding to a second area of the 3D space 801 and display the same on the screen of the display according to the user's selection of the direction of the line of sight (or input for changing the line of sight), for example, according to the angle 840 of movement from the first viewpoint 821 to the selected viewpoint 822.

In the 3D space 801, the camera/user field of view (or view direction, rendering viewport, or rendering area) may be controlled by a horizontal field of view (FOV) 851 and a vertical FOV 852. A 3D application (for VR application) may configure planes delimiting/defining a rendering viewport (for example, right/left/top/bottom/near/far planes) and thus control the FOVs.

According to various embodiments, the line of sight may be changed by a movement of a part of the user's body (for example, eye, head, torso, or hand), and a second partial image may be generated in response to a change in the line of sight. The line of sight may be changed by a signal received form an external device or an external user, or a change in the line of sight may be controlled thereby.

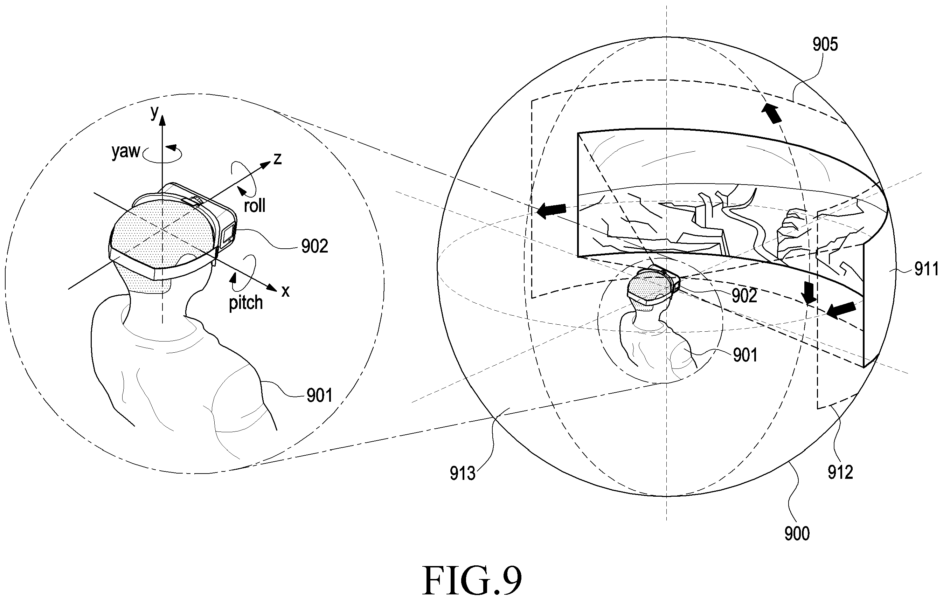

FIG. 9 is a diagram illustrating an example of a screen displayed on an HMD device when a user wears the HMD device according to various embodiments of the disclosure. Referring to FIG. 9, the user 901 may wear the housing of a wearable device, for example, on his/her head. The wearable device may be coupled to an electronic device 902, and the user may watch images displayed on the display of the electronic device 902 as image data is received.

The electronic device 902 may display received image data on the screen, and the received image data may include an image that the user can see while making a 360° rotation. The user 901 may observe images directed to both eyes, thereby watching a VR screen. The 3D application executed by the electronic device 902 may change and display images according to the movement (yaw, pitch, and roll) of the user 901 or the electronic device 902.

According to various embodiments of the disclosure, the display of the electronic device 902 may output an HMD-mode screen 911. The HMD-mode screen 911 may constitute a display screen by using a three-dimensional stereoscopic image, and may be a partial image corresponding to an area corresponding to a designated orientation of the electronic device 902. For example, when the head of the user 901 faces upward, the electronic device 902 may move upward in response thereto, and the electronic device 902 may display a screen 905 corresponding to an area above the reference position among the HMD-mode screen 911.

According to various embodiments, while the electronic device 902 displays a first partial image, information corresponding to a second partial image may be received from at least one external electronic device, and information related to received information regarding a first partial image may be displayed on the screen.

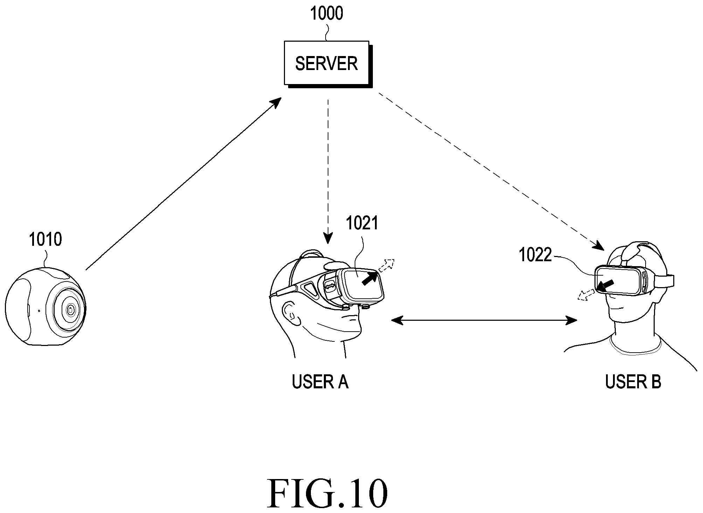

FIG. 10 is a diagram illustrating the concept of a screen display method according to various embodiments of the disclosure. Referring to FIG. 10, according to various embodiments, the same image data may be played through multiple electronic devices 1021 and 1022 worn by multiple users (for example, user A, user B, and the like).

For example, when an image is obtained by a 360° camera 1010, for example, such that a partial image can be displayed according to a designated orientation, the obtained image data (for example, 360° image data) may be uploaded to a server 1000 (for example, Facebook, YouTube, or a blog) or transmitted to the electronic devices 1021 and 1022 of respective users.

According to various embodiments, the image data stored in the server 1000 may be requested by the first electronic device 1021 of user A or the second electronic device 1022 of user B. At the request of the electronic devices 1021 and 1022, the server 1000 may provide the requested image data to respective electronic devices 1021 and 1022.

The image data transmitted to respective electronic devices 1021 and 1022 may be the same image data. Alternatively, image data displayed on the screen of the first electronic device 1021 worn by user A and image data displayed on the screen of the second electronic device 1022 worn by user B may differ from each other.

In order to guarantee that, when user A and user B receive the same user data, the users can converse with each other while watching the same screen, various embodiments of the disclosure may synchronize the playback timepoint of image data displayed on the first electronic device 1021 of user A and the playback timepoint of image data displayed on the second electronic device 1022 of user B. According to various embodiments, when the first electronic device 1021 of user A is first receiving image data, the second electronic device 1022 of user B may receive information related to the playback timepoint of image data currently played by the first electronic device 1021 of user A through the first electronic device 1021 of user A or through the server 1000. The second electronic device 1022 of user B may synchronize the playback timepoint of image data played thereby with the playback timepoint of image data played by the first electronic device 1021 of user A, by using the received information related to the playback timepoint, and then play the image data.

Even if the playback timepoint of image data played by the first electronic device 1021 of user A and the playback timepoint of image data played by the second electronic device 1022 of user B are synchronized, partial images with different orientations may be displayed on the screens according to the designated orientation of each piece of image data. For example, the first electronic device 1021 of user A may display a first partial image on the screen at the same playback timepoint, and the second electronic device 1022 of user B may display a second partial image on the screen at the same playback timepoint as that of the first electronic device 1021 of user A.

According to various embodiments, while the first electronic device 1021 of user A displays a first partial image of the image data, information related to a second partial image may be received from the second electronic device 1022 of user B. The first electronic device 1021 of user A may receive information related to the second partial image directly from the second electronic device 1022 of user B, or through the server 1000. The information related to the second partial image may include orientation information corresponding to the second partial image in the 3D area of the image data.

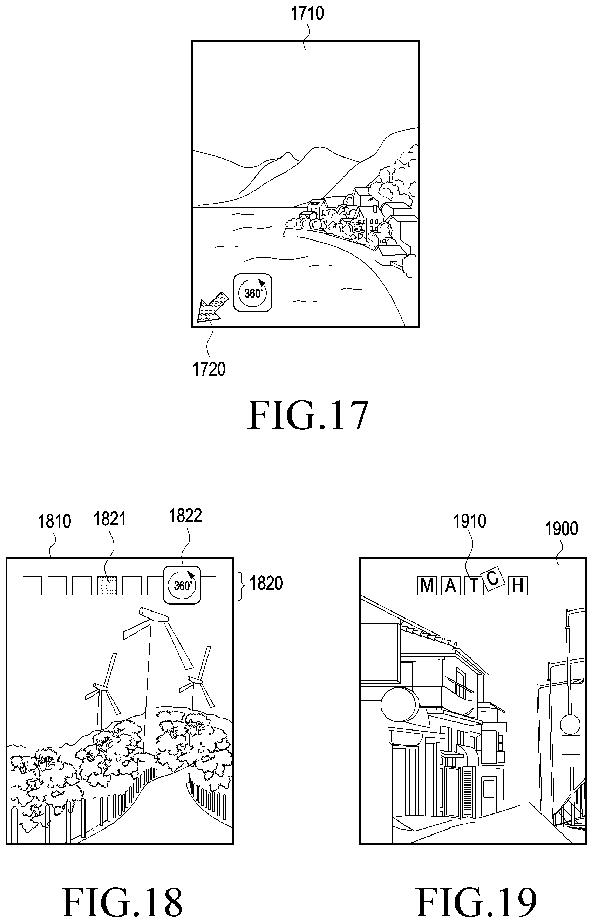

According to various embodiments, when the first electronic device 1021 of user A receives information related to the second partial image, the information related to the second partial image may be displayed on the screen of the first electronic device 1021 of user A. For example, according to various embodiments to be described later with reference to FIG. 17 and FIG. 18, the relative positional relation between the first partial image and the second partial image may be displayed on the screen. Alternatively, when the relative distance between the first partial image and the second partial image is within a predetermined distance, a notification may be displayed on the screen so as to inform that partial images that user A and user B are watching match with each other or approach each other, as will be described later with reference to FIG. 19.

When respective partial images displayed on the screens of the first electronic device 1021 of user A and the second electronic device 1022 of user B are identical (or similar), user A and user B may converse with each other while watching identical or similar images.

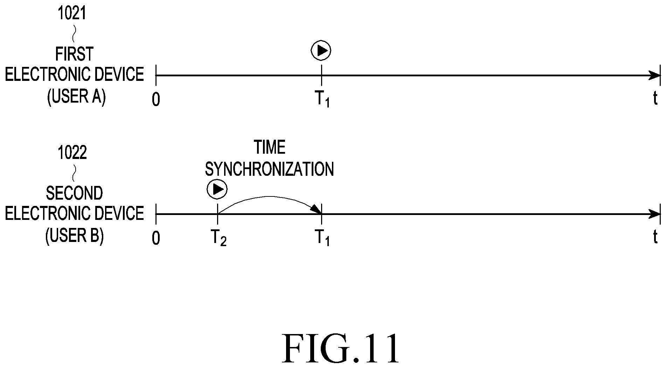

FIG. 11 is a diagram illustrating the concept of time synchronization according to various embodiments of the disclosure. Referring to FIG. 11, image data played by the first electronic device 1021 and image data played by the second electronic device 1022 may be identical, but respective playback timepoints may differ. For example, the first electronic device 1021 may currently play image data at timepoint T₁, and the second electronic device 1022 may currently play image data at timepoint T₂.

According to various embodiments, if the second electronic device 1022 requests time synchronization with the first electronic device 1021, the same may receive information regarding the playback timepoint (for example, T₁) of image data played by the first electronic device 1021 through the first electronic device 1021 or the server 1000. The second electronic device 1022 may move the playback timepoint from T₂ to T1₁, based on the received information regarding the playback timepoint of the first electronic device 1021, thereby performing time synchronization with the first electronic device 1021.

According to various embodiments, if the second electronic device 1022 is requested to play the same image data currently played by the first electronic device 1021, the second electronic device 1022 may receive information regarding the playback timepoint (for example, T₁) of the image data played by the first electronic device 1021 before starting the playback of the image data. The second electronic device 1022 may configure the starting timepoint of the image data at T₁, based on the received information regarding the playback timepoint of the first electronic device 1021 and then start playback from the timepoint T₁.

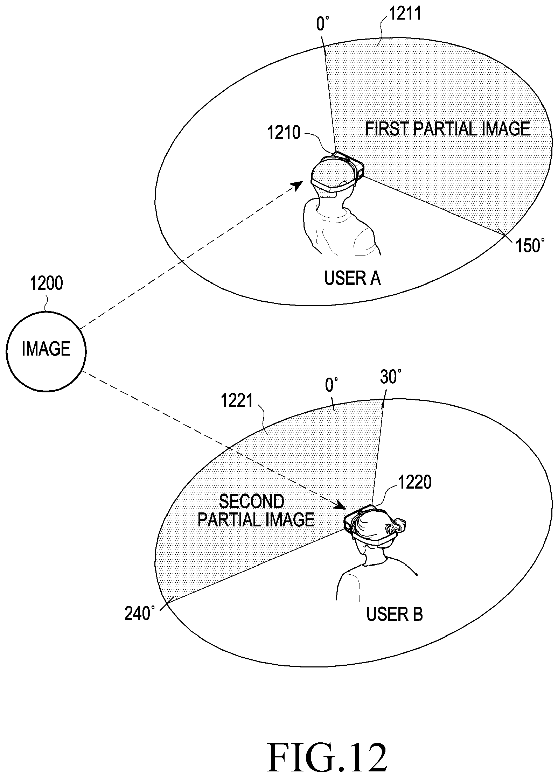

FIG. 12 is a diagram illustrating the concept of a screen display method according to various embodiments of the disclosure. Referring to FIG. 12, user A or user B may be provided with image data by using his/her own electronic device 1210 or 1220.

Even if the same image data is provided to each of multiple users, for example, user A and user B, images that respective users actually watch may differ due to the movement of each of user A and user B. For example, provided that the field of view (FOV) that each electronic device can provide is 150°, user A may watch a first partial image 1211 from 0° to 150° among the image data with reference to a specific orientation, and user B may watch a second partial image 1211 from 240° to 30° among the same image data.

In this case, multiple users may watch different images by using respective electronic devices 1210 and 1220 even if the same image data is provided to respective electronic devices 1210 and 1220, and even if the playback timepoint of the image data is identical, and this may cause a limitation during mutual communication. According to various embodiments, while a first partial image is displayed on the screen of the first electronic device 1210 of user A, information regarding a second partial image displayed on the second electronic device 1220 of user B may be received. The first electronic device 1210 may display, on the screen, the relative position between the first partial image and the second partial image or information related to the position, based on the received information regarding the second partial image.

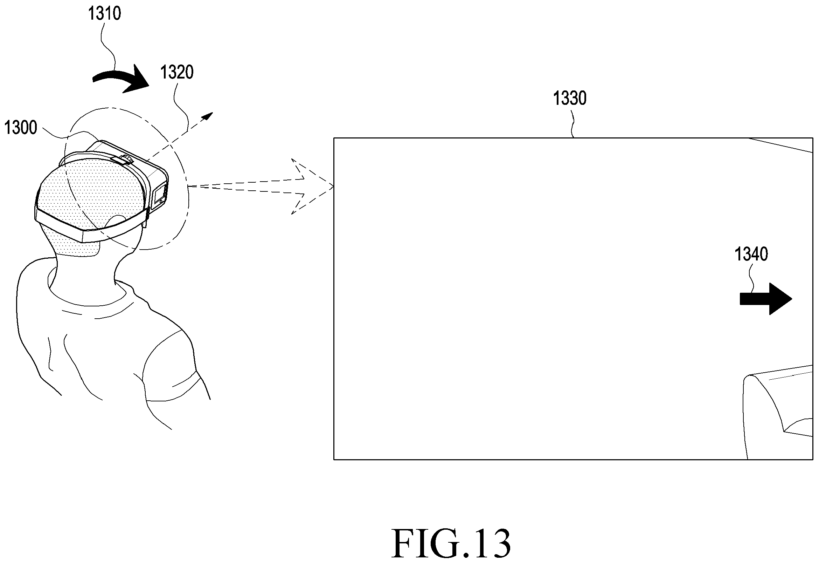

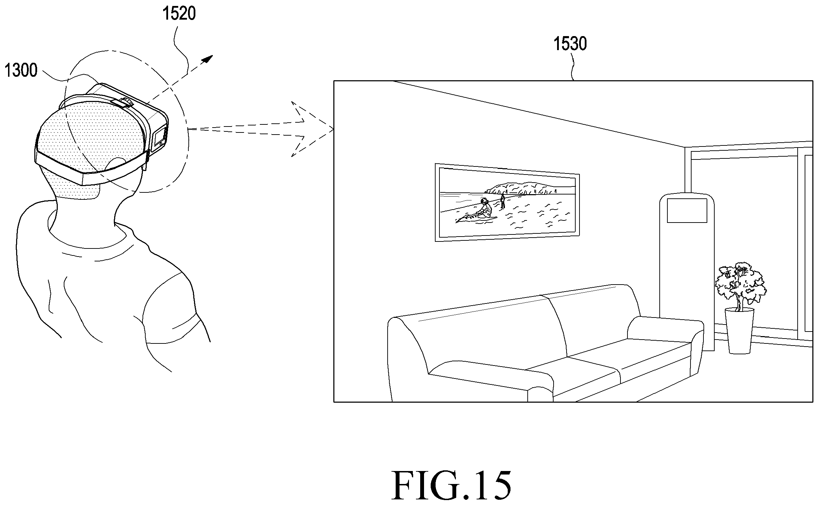

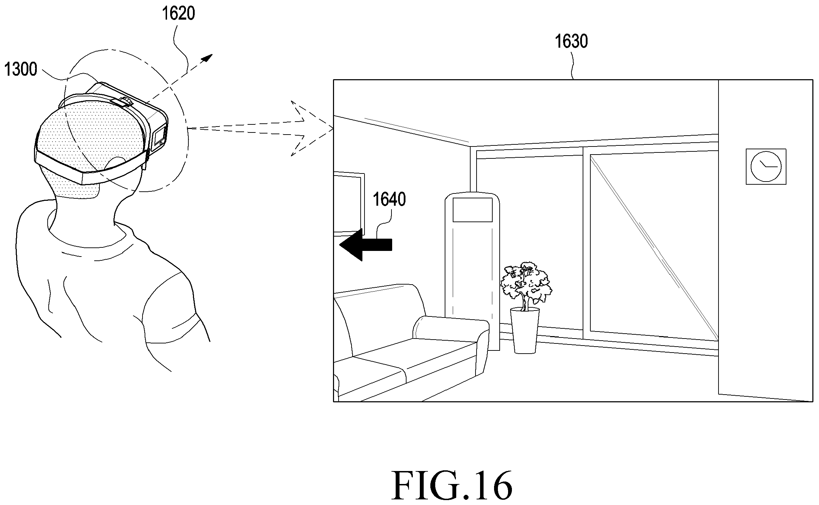

FIG. 13, FIG. 14, FIG. 15, and FIG. 16 are diagrams illustrating a change in a partial image displayed on a screen, among the entire image, according to various embodiments of the disclosure. As illustrated in FIG. 13, the user may gaze in a specific direction 1310 while wearing an electronic device 1300. As the user gazes in the specific direction 1310, the electronic device 1300 may sense a first direction 1320 in which the first side surface (for example, front surface) of the electronic device 1300 faces. The first direction 1320 in which the first side surface of the electronic device 1300 faces may be used to determine the user's gazing direction.

In order to ensure that the user can see a first partial image 1330 of image data that displays the entire space corresponding to the first direction 1320, the electronic device 1310 may display a left-eye image and a right-eye image corresponding to the first partial image 1330. The first partial image 1330 may be a partial image corresponding to a part of the entire image data that displays the entire space configured in the VR service.

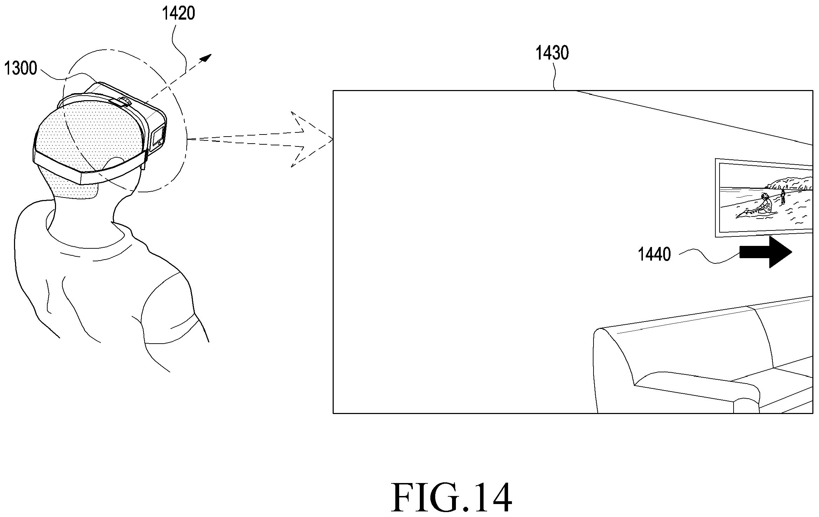

The user who wears the electronic device 1300 may turn his/her head in the rightward direction 1340 or in the leftward direction 1640, and the electronic device 1300 may sense the rotation in the rightward direction 1340 or in the leftward direction 1640 through a sensor and may sense the orientation change of the electronic device 1300. As illustrated in FIG. 14, FIG. 15, and FIG. 16, the user may turn his/her head from the first direction 1320 to the second direction 1420, the third direction 1520, and the fourth direction 1620. For example, the electronic device 1300 may sense the rotation from the first direction 1320 to the second direction 1620 and may sense the orientation changes 1340 and 1440 of the first side surface of the electronic device 1300 resulting from the rotation.

As the electronic device 1300 senses the orientation change of the first side surface of the electronic device 1300 resulting from the rightward turn of the user's head, the electronic device 1300 may change and display the first partial image 1330. For example, the electronic device 1300 may display a second partial image 1430 in response to the second direction 1420, may display a third partial image 1530 in response to the third direction 1520, and may display a fourth partial image 1630 in response to the fourth direction 1620. According to various embodiments, the electronic device 1300 may display a left-eye image and a right-eye image in order to display each partial image. Each of the first partial image 1330 to the fourth partial image 1630 may be a partial image of the entire image data indicating the entire space constituting the VR service.

As illustrated in FIG. 14, FIG. 15, and FIG. 16, the second partial image 1430 may be a partial image regarding the front view arranged on the right side relative to the first partial image 1330, the third partial image 1530 may be a screen regarding the front view arranged on the right side relative to the second partial image 1430, and the fourth partial image 1630 may be a screen regarding the front view arranged on the right side relative to the third partial image 1530. Accordingly, as the user turns his/her head to the right, he/she may successively see the relatively right-side views.

According to various embodiments, the electronic device 1300 may display, together with the partial image corresponding to the direction in which the first side surface of the electronic device 1300 faces, information regarding a second partial image displayed by an external electronic device on the screen, as illustrated in FIG. 17 to FIG. 19.

FIG. 17, FIG. 18, and FIG. 19 are diagrams illustrating examples of displaying information related to an external electronic device according to various embodiments of the disclosure.

Referring to FIG. 17, the first electronic device of the first user may display a partial image 1710 of image data, and the second electronic device of the second user may display a second partial image, which is another partial image of the same image data as that of the first user.

According to various embodiments, on the first partial image 1710 displayed on the first electronic device of the first user, a character or an image (for example, arrow image 1720) indicating the position or orientation of the second partial image displayed on the second electronic device may be displayed together on the screen, with reference to the first partial image 1710.

If an arrow image 1720 is displayed toward the left lower corner on the first partial image 1710 shown to the first user, as illustrated in FIG. 17, the user may notice that the second partial image watched by the second user faces the left lower corner of the partial image 1710 watched by the first user, unlike the partial image 1710 watched by the first user. If the first user turns his/her head toward the left lower corner, the first user can watch the same second partial image watched by the second user.

According to various embodiments, the second electronic device of the second user may display the orientation of the first partial image displayed by the first electronic device. For example, since the second partial image displayed by the second electronic device is displayed to exist near the left lower corner on the screen of the first electronic device, the first partial image displayed by the first electronic device may be displayed to exist near the right upper corner on the screen of the second electronic device.

The value of relative position difference between the first partial image 1710 watched by the first user through the first electronic device and the second partial image watched by the second user through the second electronic device may be variously expressed in terms of the size, length, color, brightness, transparency, or the like of the arrow image 1720.

According to various embodiments, the size of the arrow image 1720 may be made relatively large, or the length thereof may be made longer so as to indicate that the difference between the position of the first partial image watched by the first user and the second partial image watched by the second user is large. According to various embodiments, if a dot is displayed instead of the arrow image 1720, or if no related information is displayed, the first user and the second user may determine that they are watching partial images in the same direction or in close directions.

According to various embodiments, the first electronic device of the first user may receive information regarding the second partial image watched by the second user from the second electronic device of the second user. The first electronic device may determine that, if the position difference between the first partial image displayed by the first electronic device and the second partial image displayed by the second electronic device falls within a predetermined range (or below a threshold value), the two partial images are identical. When the two partial images are deemed to be identical, it may be indicated on the screen of the first electronic device or the second electronic device that the partial images are identical, or the indicator of the relative position difference (for example, the arrow image 1720) may be made to disappear. According to various embodiments, if the position difference is larger than or equal to a designated threshold value, the first electronic device of the first user may generate an arrow image 1720 in a shape corresponding to the position difference and may display the arrow image 1720 in a designated position on the first partial image watched by the first user.

Referring to FIG. 18, the first electronic device of the first user may display a first partial image 1810 of image data, and the second electronic device of the second user may display another partial image (for example, second partial image) of image data identical to the image data displayed by the first electronic device. On the partial image 1810 watched by the first user, an image indicating the position or orientation of the second partial image watched by the second user may be displayed as an icon image or a figure image, with reference to the first partial image watched by the first user.

For example, a character image 1822 denoting the 360° image may be displayed on the first partial image 1810 watched by the first user. The character image 1822 may indicate the field of view that can be seen on the screen from the entire image, by using a visual image. Although a 360° image is given as an example for description, a 270° image or a 200° image may also be given if necessary and various embodiments of the disclosure are not limited thereto.

On the screen of the first electronic device, the reference position 1821 of the first partial image watched by the first user and the relative position of the second partial image watched by the second user may be calculated with reference to the 360° image, and a character image 1822 (for example, an image indicating 360°) denoting the second electronic device may be displayed on a part corresponding to the relative position of the second partial image.

According to various embodiments, on the first partial image 1810 watched by the first user, a bar 1820 may be displayed to indicate the positional relation of partial images currently displayed according to the image data, as illustrated in FIG. 18. The bar 1820 may indicate the entire image that can be seen by the 360° image. On the bar 1820, the reference position 1821 of the first partial image watched by the first user may be displayed, and the relative position of the second partial image watched by the second user may be displayed together as a character image 1822.

The position of the first partial image and the position of the second partial image may indicate the absolute position of each partial image in the entire image data or may indicate the relative position of the second partial image with reference to the first partial image.

Referring to FIG. 19, the first electronic device of the first user may display a first partial image 1900 of image data, and the second electronic device of the second user may display another partial image (for example, second partial image) of image data identical to the image data displayed by the first electronic device. On the partial image 1900 watched by the first user, an image indicating the position or orientation of the second partial image watched by the second user may be displayed as an icon image or a figure image, with reference to the first partial image watched by the first user, as illustrated in FIG. 17 or FIG. 18.

The first user or the second user may check the indicator of the position between the partial images and may move his/her head toward the position of the corresponding partial image such that the users watch the same partial image. By moving the head as described above, the partial image displayed on the screen, among the image data, is changed as illustrated in FIG. 13 to FIG. 16, and the position difference (or angle difference) between the two partial images may approach within a predetermined distance (or within a predetermined angle). According to various embodiments, if it is determined that the position difference (or angle difference) between the two partial images has approached within a predetermined distance, and that the users are substantially watching the same partial image, an image (for example, a text image 1910 "MATCH") may be displayed on the screen so as to indicate that the two partial images match, as illustrated in FIG. 19.

By displaying the indicators described with reference to FIG. 17, FIG. 18, and FIG. 19 on the electronic devices of respective users, each user can recognize the relative distance between a partial image watched by the user and another partial image watched by another user or whether or not the partial images match. Although two users are given as an example for description, the same is applied to three or more users. It is also possible to implement such that, according to a user configuration, information related to the electronic device of a specific user is selectively displayed on the electronic device. According to various embodiments, it is possible to implement such that the electronic devices of respective users are distinguished and displayed by different names, colors, or images.

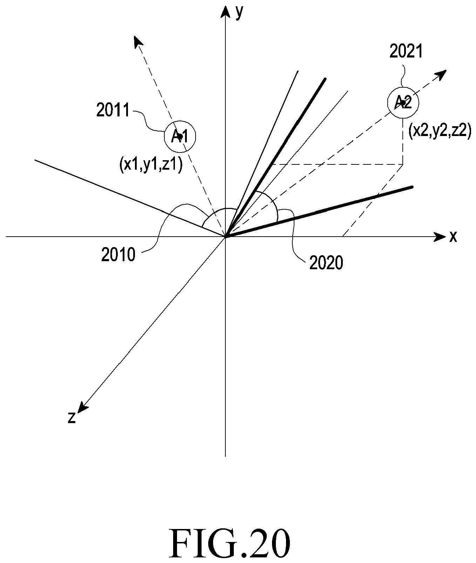

FIG. 20 is a diagram illustrating the concept of a relative distance between partial images according to various embodiments of the disclosure. As illustrated in FIG. 20, the entire image data (for example, 360° image data) may be configured three-dimensionally.

According to various embodiments, a first partial image may be expressed by a first coordinate (x1, y1, z1) corresponding to a first direction 2011, and a second partial image may be expressed by a second coordinate (x2, y2, z2) corresponding to a second direction 2021. The above coordinate display method is only an embodiment and various coordinate systems may be used to indicate the direction in which each partial image faces. A first user FOV 2010 may be configured for the first partial image, and a second user FOV 2020 may be configured for the second partial image.

The relative position between the first partial image and the second partial image may be calculated based on values of the first coordinate and the second coordinate. In addition, it may be determined that the first partial image and the second partial image match with each other if the distance between the first coordinate and the second coordinate is with a configured value.

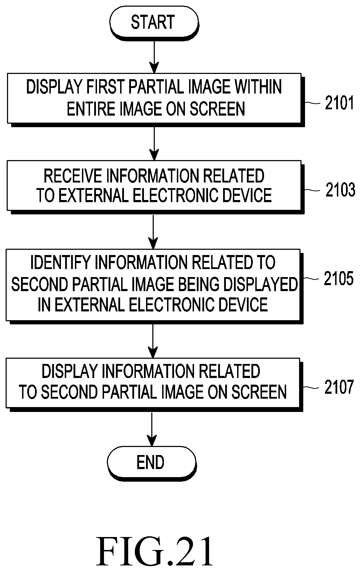

FIG. 21 is a flow chart illustrating a screen display procedure of an electronic device according to various embodiments of the disclosure. Referring to FIG. 21, in operation 2101, the electronic device (first electronic device) (for example, the electronic device 101 of FIG. 1 or the first electronic device 1021 of FIG. 10) may display, on a screen, a first partial image corresponding to a first orientation among the entire image data.

In operation 2103, the electronic device may receive information related to at least one external electronic device (second electronic device) (for example, the electronic device 102 or 104 of FIG. 1 or the second electronic device 1022 of FIG. 10) that is playing the same image data as that of the electronic device. According to various embodiments, the information related to the external electronic device may include information related toregarding a second partial image being displayed on the screen of the external electronic device.

In operation 2105, the electronic device may identify information regarding the second partial image being displayed by the external electronic device. In operation 2107, the electronic device may display the information related to the second partial image on the screen.

According to various embodiments, the information related to the second partial image may be transmitted from the external electronic device (second electronic device) or from the server at the request of the electronic device (first electronic device). According to various embodiments, the second electronic device may transmit information related to the second partial image to the first electronic device or to the server at every predetermined time.

According to various embodiments, the second electronic device may transmit information related to the second partial image arbitrarily or if a designated condition is satisfied. For example, the designated condition may be that the second electronic device moves to a predetermined extent or more. The information related to the second partial image may be position information of the second partial image displayed by the second electronic device. For example, the information regarding the second partial image may include information (for example, coordinate value) regarding the orientation to which the partial image corresponds among the entire image data (for example, 360° image data).

A method for displaying a screen in an electronic device according to one of various embodiments of the disclosure may include the operations of: displaying, on a screen of the electronic device, at least a part of an image corresponding to a designated orientation among image data, as a first partial image; receiving information related to an external electronic device through a communication circuit; identifying information related to a second partial image being displayed by the external electronic device among the image data, from information received through the communication circuit; and while the first partial image is displayed on the screen, displaying the information related to the second partial image on the screen.

According to various embodiments of the disclosure, the information related to the second partial image being displayed on the screen may include information regarding a relative positional relation with the first partial image.

According to various embodiments of the disclosure, the screen display method by an electronic device may further include the operations of: determining the distance between the first partial image and the second partial image based on the received information related to the external electronic device; and outputting a preconfigured notification when the distance between the first partial image and the second partial image is within a designated distance as a result of the determining.

According to various embodiments of the disclosure, the preconfigured notification may include at least one of a sound, an image, a symbol, and an animation.

According to various embodiments of the disclosure, the method may further include receiving the image data from a server.

According to various embodiments of the disclosure, the method may further include the operations of: receiving a playback timepoint synchronization request with the external electronic device; and transmitting information regarding a playback timepoint of the image data being displayed on the screen in response to the playback timepoint synchronization to the external electronic device.

According to various embodiments of the disclosure, the method may further include receiving information regarding a playback timepoint of the image data being played by the external electronic device.

According to various embodiments of the disclosure, the method may further include transmitting information related to the first partial image being displayed on the screen to the external electronic device.

According to various embodiments of the disclosure, the image data may include at least one of a VR image, a 360° image, a panorama image, an animation image, a manga, a still image, and a panorama photograph.

According to various embodiments of the disclosure, the method may further include determining whether or not the playback timepoint of the image data being played by the external electronic device and the playback timepoint of the image data being played by the electronic device are synchronized; and displaying information related to the second partial image on the screen when it is confirmed as a result of the determination that the playback timepoints are synchronized.

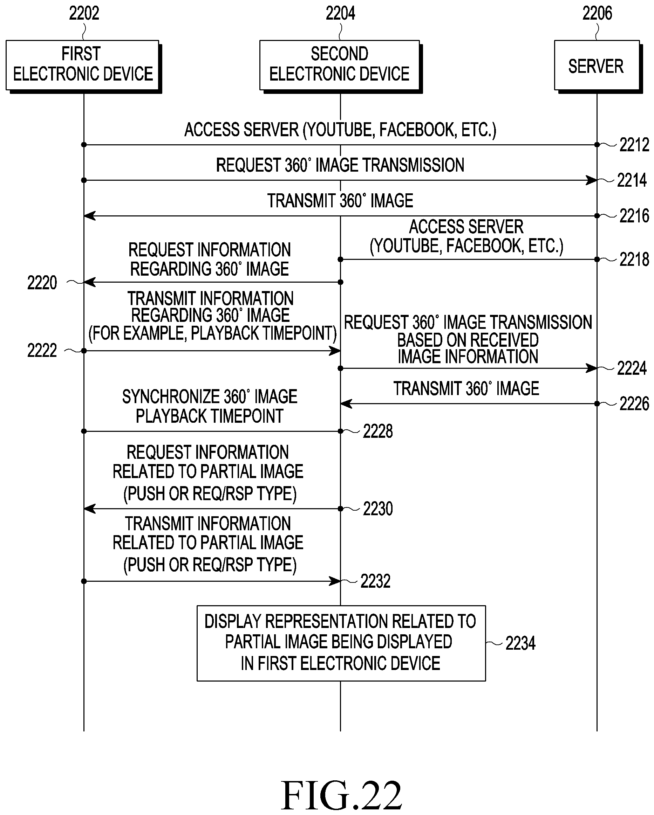

FIG. 22 is a signal flowchart illustrating information transmitted/received between devices according to various embodiments of the disclosure. Referring to FIG. 22, the first electronic device 2202 may access a server 2206 (2212) and request transmission of image data (for example, 360° image) (2214). The server 2206 may transmit the requested 360° image to the first electronic device 2202 (2216). The first electronic device 2202 may receive and store the transmitted 360° image, and may play the same automatically or at the user's request.

The second electronic device 2204 may access the server 2206 (2218). The second electronic device 2204 may request the first electronic device 2202 to provide information regarding image data played by the first electronic device 2202 (for example, playback timepoint and/or orientation information) (2220).

The first electronic device 2202 may transmit information regarding image data played by the first electronic device 2202 to the second electronic device 2204 (2222). The second electronic device 2204 may request the server 2206 to transmit image data, based on the information received from the first electronic device 2202 (2224). The server 2206 may transmit the requested image data in response to the request of the second electronic device 2204 (2226).

The second electronic device 2204 may synchronize the playback timepoint of the image data received from the server with the playback timepoint of the first electronic device 2202 (2228). The second electronic device 2204 may request the first electronic device 2202 to provide information regarding a partial image (for example, a first partial image) displayed on the screen of the first electronic device 2202 (2230). The method of requesting information regarding the partial image may be implemented in a push type or in a req/rsp type.

In response to the request, the first electronic device 2202 may transmit information related to the first partial image being displayed on the screen of the first electronic device 2202 to the second electronic device 2204 (2232). The second electronic device 2204 may display, on the screen, the information related to the first partial image displayed on the screen of the first electronic device 2202 (2234). According to various embodiments, the information may be displayed as an overlay to the second partial image played by the second electronic device 2204.

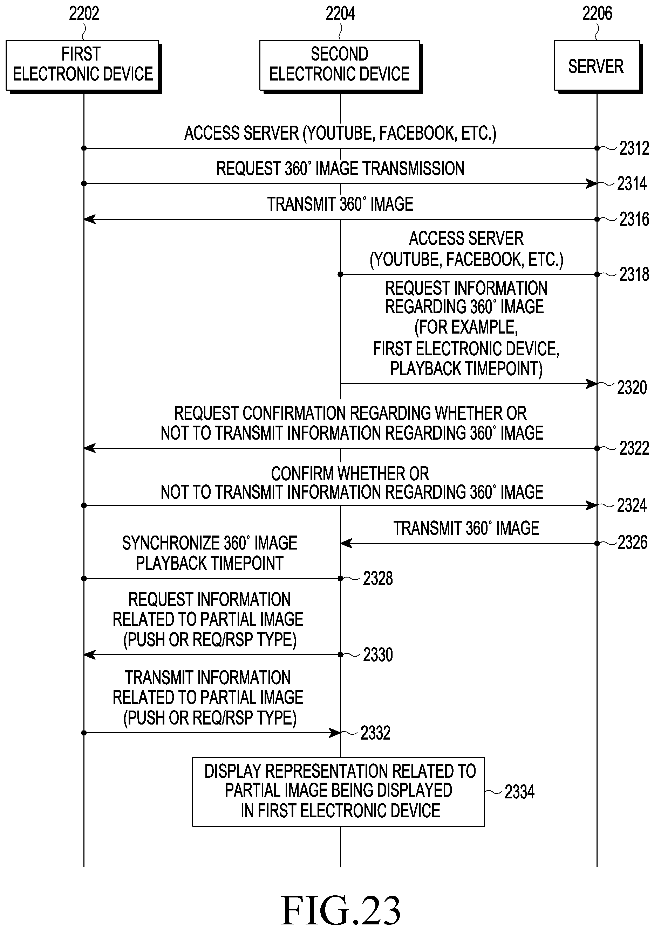

FIG. 23 is a signal flowchart illustrating information transmitted/received between devices according to various embodiments of the disclosure. Referring to FIG. 23, the first electronic device 2202 may access a server 2206 (2312) and request transmission of image data (for example, 360° image) (2314). The server 2206 may transmit the requested 360° image to the first electronic device 2202 (2316). The first electronic device 2202 may receive and store the transmitted 360° image and may play the same automatically or at the user's request.

The second electronic device 2204 may access the server 2206 (2318). After accessing the server 2206 (2318), the second electronic device 2204 may request the server 2206 to provide information regarding image data (for example, 360° image data) played by the first electronic device 2202 (for example, identification information of the first electronic device 2202, playback timepoint and/or orientation information of image data played by the first electronic device 2202, and the like) (2320).

The server 2206 may request the first electronic device 2202 to confirm whether or not to transmit information regarding image data played by the first electronic device 2202 (for example, playback timepoint and/or orientation information) (2322). In response to the request, the first electronic device 2202 may transmit an information transmission confirmation message regarding the image data to the server 2206 (2324). After receiving the information transmission confirmation message, the server 2206 may transmit the requested image data to the second electronic device 2204 (2326).

The second electronic device 2204 may synchronize the playback timepoint of the image data received from the server with the playback timepoint of the first electronic device 2202 (2328). The second electronic device 2204 may request the first electronic device 2202 to provide information regarding a partial image (for example, a first partial image) displayed on the screen of the first electronic device 2202 (2330). The method of requesting information regarding the partial image may be implemented in a push type or in a request/response (req/rsp) type.

In response to the request, the first electronic device 2202 may transmit information regarding the first partial image displayed on the screen of the first electronic device 2202 to the second electronic device 2204 (2332). The second electronic device 2204 may display, on the screen, the information related to the first partial image displayed on the screen of the first electronic device 2202 (2334). According to various embodiments, the information may be displayed as an overlay to the second partial image played by the second electronic device 2204.

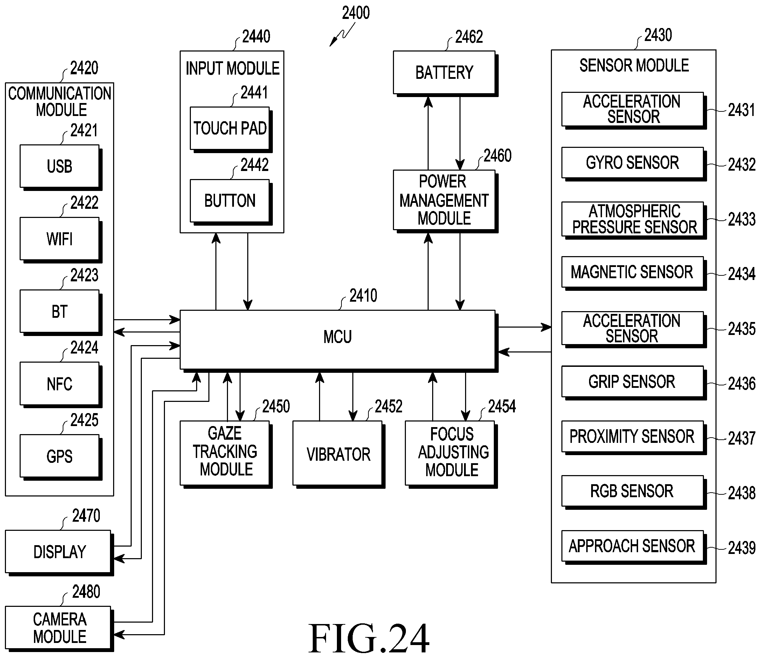

FIG. 24 is a block diagram illustrating an example of another configuration of the wearable device 2400 according to various embodiments of the disclosure.

Referring to FIG. 24, the wearable device 2400 may provide the wearer with an operation identical or similar to that of a mounted electronic device (for example, a display device) independently of the electronic device. The wearable device 2400 may include a micro control unit (MCU) 2410, a communication module 2420, a sensor module 2430, an input module 2440, a gaze tracking module 2450, a vibrator 2452, a focus adjusting module 2454, a power management module 2460, a battery 2462, a display 2470, and a camera module 2480.

The communication module 2420 may include, for example, a USB module 2421, a Wi-Fi module 2422, a BT module 2423, an NFC module 2424, and a GPS module 2425.

The sensor module 2430 may include, for example, at least one of an acceleration sensor 2431, a gyro sensor 2432, an atmospheric pressure sensor 2433, a magnetic sensor 2434, an acceleration sensor 2435, a grip sensor 2436, a proximity sensor 2437, an RGB sensor 2438, and an approach sensor 2439.

The input module 2440 may include a touch pad 2441 and a button 2442.

The wearable device 2400 may include a display 2470 that can be fixedly installed on the body thereof, instead of the structure in which an electronic device (for example, a display device) can be attached thereto/detached therefrom. The display 2470 may be installed on the body such that a screen can be provided to the user through the lens portions illustrated in FIG. 4, FIG. 5, and FIG. 6 instead of the display of the mounted electronic device.

Each of constituent elements described in various embodiments may be configured by at least one component, and the name of the corresponding constituent element may vary depending on the type of the electronic device. The electronic device according to various embodiments of the disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware device may be configured to operate as one or more software modules in order to perform the operation of the disclosure, and vice versa.

The programming module according to the disclosure may include one or more of the aforementioned components or may further include other additional components, or some of the aforementioned components may be omitted. Operations executed by a module, a programming module, or other component elements according to various embodiments of the disclosure may be executed sequentially, in parallel, repeatedly, or in a heuristic manner. Furthermore, some operations may be executed in a different order or may be omitted, or other operations may be added.

According to various embodiments, there may be provided a storage medium that stores commands. The commands may be configured to cause, when executed by at least one processor, the at least one processor to perform at least one operation. The at least one operation may include the operations of: displaying, on a screen of the electronic device, at least a part of an image corresponding to a designated orientation among image data, as a first partial image; receiving information related to an external electronic device through a communication circuit; identifying information related to a second partial image of the image data being displayed by the external electronic device among the image data, from information received through the communication circuit; and while the first partial image is displayed on the screen, displaying the information related to the second partial image on the screen.

In addition, the at least one process may include the processes of: acquiring multiple images from multiple imaging modules disposed to be spaced apart from each other and to have different optical-axis directions; generating reference FOV information, with regard to a 360° image generated by using the multiple images, such that the reference FOV information indicates FOV information that becomes a reference of the 360° image; and inserting the reference FOV information into information related to the 360° image.

Various embodiments disclosed herein are provided merely to easily describe technical details of the disclosure and to help the understanding of the disclosure, and are not intended to limit the scope of the disclosure. Accordingly, the scope of the disclosure should be construed as including all modifications or various other embodiments based on the technical idea of the disclosure.

## Claims

1. An electronic device, comprising:
a display configured to display, on a screen, at least a part of an image corresponding to a designated orientation among image data, as a partial image;
a communication circuit configured to receive information related to an external electronic device; and
a processor configured to:
control to display a first partial image among the image data through the display,
identify information related to a second partial image being displayed in the external electronic device among the image data, from information received through the communication circuit, and
while the first partial image is displayed on the screen through the display, control to display the information related to the second partial image through the display.

2. The electronic device of claim 1, wherein the information related to the second partial image being displayed through the display comprises information regarding a relative positional relation with the first partial image.

3. The electronic device of claim 1, wherein the processor is configured to:
control to ouptut a preconfigured notification when the distance between the first partial image and the second partial image is within a designated distance.

4. The electronic device of claim 3, wherein the preconfigured notification comprises at least one of a sound, an image, a symbol, and an animation.

5. The electronic device of claim 1, wherein the electronic device is configured to receive the image data from a server.

6. The electronic device of claim 1, wherein the processor is configured to:
control to transmit information regarding a playback timepoint of the image data being played by the electronic device through the communication circuit, in response to a playback timepoint synchronization request of the external electronic device.

7. The electronic device of claim 1, wherein the communication circuit is configured to receive information regarding a playback timepoint of the image data being played by the external electronic device.

8. The electronic device of claim 1, wherein the processor is configured to:
control to transmit information regarding the first partial image being displayed through the display to the external electronic device through the communication circuit.

9. The electronic device of claim 1, wherein the image data comprises at least one of a VR image, a 360° image, a panorama image, an animation image, a manga, a still image, and a panorama photograph.

10. The electronic device of claim 1, wherein the processor is configured to:
control to display information related to the second partial image through the display, when a playback timepoint of the image data played by the external electronic device and a playback timepoint of the image data played by the electronic device are synchronized.

11. A method for displaying a screen in an electronic device, the method comprising:
displaying, on a screen of the electronic device, at least a part of an image corresponding to a designated orientation among image data, as a first partial image;
receiving information related to an external electronic device through a communication circuit;
identifying information related to a second partial image being displayed by the external electronic device among the image data, from information received through the communication circuit; and
while the first partial image is displayed on the screen, displaying the information related to the second partial image on the screen.

12. The method of claim 11, wherein the information related to the second partial image being displayed on the screen comprises information regarding a relative positional relation with the first partial image.

13. The method of claim 11, further comprising:
determining the distance between the first partial image and the second partial image based on the received information related to the external electronic device; and
outputting a preconfigured notification when the distance between the first partial image and the second partial image is within a designated distance as a result of the determining.

14. The method of claim 13, wherein the preconfigured notification comprises at least one of a sound, an image, a symbol, and an animation.

15. The method of claim 11, further comprising: receiving the image data from a server.
